# EUROPEAN PATENT APPLICATION

(11) **EP 3 301 521 A2**
(43) Date of publication of application: **04.04.2018**
(21) Application number: 17193575.2
(22) Date of filing: 27.09.2017
(51) Int. Cl.: G05B 15/02

(54) **METHOD AND APPARATUS FOR CONTROLLING DEVICE**

(30) Priority: 28.09.2016 CN 201610861147
(71) Applicant: Beijing Xiaomi Mobile Software Co., Ltd., Beijing 100085 (CN)
(72) Inventor: LIU, Huayijun, Haidian District, Beijing 100085 (CN); WU, Ke, Haidian District, Beijing 100085 (CN); CHEN, Tao, Haidian District, Beijing 100085 (CN)
(74) Representative: Sadler, Peter Frederick

(57) **Abstract**

The present invention discloses a method and apparatus for controlling a device, and relates to smart control. The method includes: collecting (201) biological characteristic information; acquiring (202) a control operation corresponding to the biological characteristic information; and controlling (203) smart home device to execute a preset function according to the control operation, the smart home device including at least one of a smart home appliance, a smart window and a smart curtain.

## Description

### TECHNICAL FIELD

The present disclosure generally relates to smart control, and more particularly, to a method and an apparatus for controlling a device.

### BACKGROUND

Along with improvement of sciences and technologies, more and more smart home appliances enter people's life. A smart device is an electronic device that is able to connect, share data and/or interact with its user and/or other smart devices. Smart devices are generally capable of connecting to other devices or networks via different wireless protocols such as Bluetooth, NFC, Wi-Fi, 3G, 4G, etc. Such devices may be able to operate to some extent interactively and/or autonomously. A smart home device is a smart device that functions as a home appliance, such as a smart window, a smart curtain, a smart lamp, a smart air conditioner, a smart thermostat, smart light bulbs, a smart refrigerator, a smart oven and so on.

In a related technology, when smart home appliances are used, a user may be required to control the smart home appliances to execute a fixed function through a fixed button. For example, when a smart air conditioner is used, the user is required to turn on the smart air conditioner through a button 1, control a temperature through a button 2, control an air volume through a button 3, control timing through a button 4 or the like.

Since a user is required to control smart home appliances to execute a function through one or more corresponding fixed buttons, complexity of user control over smart home appliances in the abovementioned manner is relatively high. Particularly, when the smart home appliances have relatively more functions, the user is required to find a required button from multiple buttons, and only then may control the smart home appliances in the manner desired. Therefore, the complexity of control is high.

### SUMMARY

Accordingly, the present invention provides a method and an apparatus for controlling a device in accordance with claims which follow.

According to a first aspect, there is provided a method for controlling a smart home device, which may include:
collecting biological characteristic information;
acquiring a control operation corresponding to the biological characteristic information, different biological characteristic information corresponding to different control operations; and
controlling smart home device to execute a preset function according to the control operation. The smart home device may include at least one of a smart home appliance, a smart window and a smart curtain.

Therefore, a problem in the related technology is solved whereby a control process is relatively tedious and user operation is relatively high in complexity since the user is required to control the smart home device to execute a fixed function through a fixed button when using the smart home device. By controlling the smart home device to execute a preset function according to a control operation corresponding to a particular biological characteristic of the user, complexity in control over the smart home device is reduced and the control process is simplified.

The control operation may be a control operation of a particular smart home device, whereby the biological characteristic may indicate the device to control as well as the control function to enact.

Optionally, the biological characteristics may be associated with a particular user. Alternatively, the biological characteristics may be general characteristics, rather than user specific, whereby when a biological characteristic is detected, regardless of the user to which the characteristic belongs, the smart home device is controlled in the same manner.

Optionally, acquiring the control operation corresponding to the biological characteristic information may include:
sending an acquisition request to a mobile terminal;
receiving a relationship returned by the mobile terminal, the relationship including a relationship between biological characteristic information and control operations; and
acquiring the control operation corresponding to the biological characteristic information according to the relationship.

Optionally, acquiring the control operation corresponding to the biological characteristic information may include:
sending the biological characteristic information to the mobile terminal, the mobile terminal acquiring the control operation corresponding to the biological characteristic information according to a relationship, the relationship including a relationship between biological characteristic information and control operations; and
receiving the control operation returned by the mobile terminal.

Optionally, acquiring the control operation corresponding to the biological characteristic information may include:
collecting at least one piece of sample biological characteristic information, the sample biological characteristic information including the biological characteristic information;
receiving a setting signal, and setting a corresponding control operation for each piece of sample biological characteristic information according to the setting signal;
establishing and storing a relationship between each piece of sample biological characteristic information and a corresponding control operation; and
acquiring the control operation corresponding to the biological characteristic information according to the relationship.

Optionally, the smart home device may include a smart window, and controlling the smart home device to execute the preset function according to the control operation may include:
controlling the smart window to be opened, closed and locked or regulating an opening angle of the smart window according to the control operation.

Optionally, the smart home device may include a smart lamp, and controlling the smart home device to execute the preset function according to the control operation may include:
controlling the smart lamp to be turned on and turned off or regulating luminance according to the control operation.

Optionally, the smart home device may include a smart air conditioner, and controlling the smart home device to execute the preset function according to the control operation may include:
controlling the smart air conditioner to be turned on and turned off, regulating a temperature or an air volume or implementing timing according to the control operation.

Optionally, the smart home device may include a smart curtain, and controlling the smart home device to execute the preset function according to the control operation may include:
regulating an opening width or an opening height of the smart curtain according to the control operation.

According to a second aspect, there is provided an apparatus for controlling a smart home device, which includes:
a collection module, configured to collect biological characteristic information;
an acquisition module, configured to acquire a control operation corresponding to the biological characteristic information, different biological characteristic information corresponding to different control operations; and
a control module, configured to control smart home device to execute a preset function according to the control operation. The smart home device may include at least one of smart home appliance, a smart window and a smart curtain.

The advantages and technical effects of the device according to the invention correspond to those of the method presented above.

Optionally, the acquisition module may include:
a request sending sub-module, configured to send an acquisition request to a mobile terminal;
a relationship receiving sub-module, configured to receive a relationship returned by the mobile terminal, the relationship including a relationship between biological characteristic information and control operations; and
a first acquisition sub-module, configured to acquire the control operation corresponding to the biological characteristic information according to the relationship.

Optionally, the acquisition module may include:
an information sending sub-module, configured to send the biological characteristic information to the mobile terminal, the mobile terminal acquiring the control operation corresponding to the biological characteristic information according to a relationship, the relationship including a relationship between biological characteristic information and control operations; and
an operation receiving sub-module, configured to receive the control operation returned by the mobile terminal.

Optionally, the acquisition module may include:
an information collection sub-module, configured to collect at least one piece of sample biological characteristic information, the sample biological characteristic information including the biological characteristic information;
a signal receiving sub-module, configured to receive a setting signal and set a corresponding control operation for each piece of sample biological characteristic information according to the setting signal;
a relationship storage sub-module, configured to establish and store a relationship between each piece of sample biological characteristic information and a corresponding control operation; and
a second acquisition sub-module, configured to acquire the control operation corresponding to the biological characteristic information according to the relationship.

Optionally, the smart home device may include a smart window, and the control module may further be configured to control the smart window to be opened, closed and locked or regulate an opening angle of the smart window according to the control operation.

Optionally, the smart home device may include a smart lamp, and the control module may further be configured to control the smart lamp to be turned on and turned off or regulate luminance according to the control operation.

Optionally, the smart home device may include a smart air conditioner, and the control module may further be configured to control the smart air conditioner to be turned on and turned off, regulate a temperature or an air volume or implement timing according to the control operation.

Optionally, the smart home device may include a smart curtain, and the control module may further be configured to regulate an opening width or an opening height of the smart curtain according to the control operation.

According to a third aspect, there is provided an apparatus for controlling a device, which may include:
a processor; and
a memory configured to store instructions executable by the processor,
wherein the processor may be configured, by virtue of the stored instructions, to carry out any of the methods described above.

In one particular embodiment, the steps of the method for controlling a device are determined by computer program instructions.

Consequently, according to a fourth aspect, the invention is also directed to a computer program for executing the steps of a method for controlling a device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
Fig. 1 is a schematic diagram illustrating an implementation environment involved in a method for controlling a device according to a part of exemplary embodiments.
Fig. 2 is a flow chart showing a method for controlling a device according to an exemplary embodiment.
Fig. 3 is a flow chart showing a method for controlling a device according to another exemplary embodiment.
Fig. 4 is a schematic diagram illustrating setting of a relationship in a mobile terminal according to an exemplary embodiment.
Fig. 5 is a flow chart showing a method for controlling a device according to another exemplary embodiment.
Fig. 6 is a flow chart showing a method for controlling a device according to another exemplary embodiment.
Fig. 7 is a schematic diagram illustrating setting of a relationship in a mobile terminal according to an exemplary embodiment.
Fig. 8 is a block diagram illustrating an apparatus for controlling a device according to an exemplary embodiment.
Fig. 9 is a block diagram illustrating an apparatus for controlling a device according to another exemplary embodiment.
Fig. 10 is a block diagram illustrating an apparatus for controlling a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

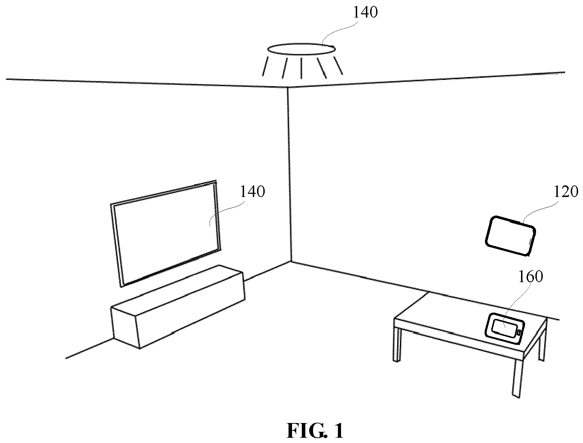

Fig. 1 is a schematic diagram illustrating an implementation environment involved in a method for controlling a device according to part of exemplary embodiments. As shown in Fig. 1, the implementation environment may include a control terminal 120 and a smart home appliance 140.

The control terminal 120 has a biological characteristic information collection function. A biological characteristic refers to a detectable property of the body of a user, and in particular may refer to one or more detectable parameters of an aspect of the user's body. Optionally, a biological characteristic includes one or more detectable parameters relating to a fingerprint, an iris, a vein, a retina, a pulse, skin, a voice, a face or the like.

Optionally, the control terminal 120 may be a smart mobile phone, a tablet computer, an electronic book reader, a console arranged on a wall or the like. For example, the control terminal 120 is a control panel arranged on a wall of a house.

Optionally, the control terminal 120 establishes a connection with the smart home appliance 140 in at least one manner. The connection may be wireless and may optionally be by one of Bluetooth (BT), Wireless Fidelity (WIFI) and Near Field Communication (NFC) technologies.

The smart home appliance 140 may include: at least one of a smart home appliance device, a smart window and a smart curtain. Moreover, the smart home appliance may be a smart lamp, a smart air conditioner, a router, a smart power strip, a smart television or the like. The smart home appliance 140 may execute a preset function under control of the control terminal 120. During practical implementation, there may be one or more smart home appliances 140, which will not be limited in the embodiments.

Optionally, the implementation environment further includes a mobile terminal 160.

The mobile terminal 160 has a biological characteristic collection function, and the mobile terminal 160 establishes a connection with the control terminal 120 and the smart home appliance 140, respectively. Preferably this connection is established wirelessly and may use one of BT, WIFI and NFC for example.

Optionally, the mobile terminal 160 is a smart mobile phone, a tablet computer, a smart television, an electronic book reader, a multimedia player, a laptop computer or the like. In all embodiments described herein, the mobile terminal may perform the function of the control terminal rather than the control terminal and mobile terminal being separate devices; in other words the mobile terminal and the control terminal may be the same device.

Optionally, a relationship between biological characteristic information and control operations is preset in the mobile terminal 160. A specific setting process includes: after the mobile terminal 160 establishes the connection with the smart home appliance 140, acquiring an identifier of the smart home appliance 140; after each piece of sample biological characteristic information is collected, receiving a setting signal, and determining, by the mobile terminal 160, the smart home appliance and the preset function according to the setting signal and the acquired identifier of the smart home appliance 140; and setting a corresponding control operation for each piece of sample biological characteristic information. Herein, the control operation includes an operation of controlling the smart home appliance to execute the preset function.

A process whereby the control terminal 120 controls the smart home appliance to execute the preset function includes the steps of: the control terminal 120 sends an acquisition request to the mobile terminal 160 after collecting the biological characteristic information, wherein the sample biological characteristic information includes the biological characteristic information, the relationship fed back by the mobile terminal 160 is received, and the control operation corresponding to the biological characteristic information is acquired according to the relationship, thereby controlling the smart home appliance to execute the preset function. Alternatively, the control terminal 120 sends the collected biological characteristic information to the mobile terminal 160, and receives the control operation fed back by the mobile terminal 160, wherein the control operation is acquired according to the relationship and corresponds to the biological characteristic information, thereby controlling the smart home appliance to execute the preset function. Alternatively, the relationship between the biological characteristic information and the control operations is pre-stored in the control terminal 120, and the control operation corresponding to the biological characteristic information is acquired according to the relationship, thereby controlling the smart home appliance to execute the preset function.

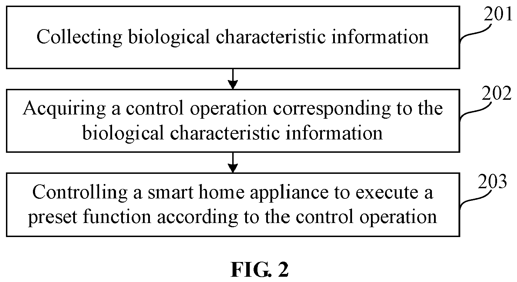

Fig. 2 is a flow chart showing a method for controlling a device according to an exemplary embodiment. As shown in Fig. 2, the method for controlling a device is applied to a control terminal 120 in an implementation environment shown in Fig. 1, and includes the following steps.

In Step 201, biological characteristic information is collected.

In Step 202, a control operation corresponding to the biological characteristic information is acquired.

Herein, different biological characteristic information corresponds to different control operations.

In Step 203, a smart home appliance is controlled to execute a preset function according to the acquired control operation.

Herein the smart home appliance includes at least one of smart home appliance device, a smart window and a smart curtain.

From the above, according to the method for controlling a device provided by the embodiment of the present disclosure, biological characteristic information is collected; the control operation corresponding to the collected biological characteristic information is acquired; and the smart home appliance is controlled to execute the preset function according to the control operation. Therefore, the problem in the related technology is solved whereby a control process is relatively more tedious and user operation is relatively high in complexity since the user is required to control the smart home appliance to execute a fixed function through a fixed button when using the smart home appliance. Embodiments controlling the smart home appliance to execute the preset function according to the control operation corresponding to the biological characteristic information of the user reduces complexity in control over the smart home appliance and simplifies the control process.

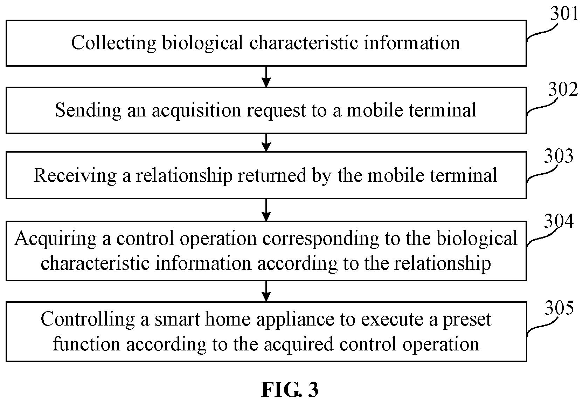

Fig. 3 is a flow chart showing a method for controlling a device according to another exemplary embodiment. As shown in Fig. 3, the method for controlling a device is applied to a control terminal 120 in an implementation environment shown in Fig. 1, and includes the following steps.

In Step 301, biological characteristic information is collected.

The control terminal collects the biological characteristic information through a biological characteristic collector. Optionally, a biological characteristic includes one or more parameters relating to: a fingerprint, an iris, a vein, a retina, a pulse, skin, a voice, a face or the like.

Optionally, different types of biological characteristic collectors are adopted for different biological characteristics. For example, when the biological characteristic is a fingerprint parameter, the biological characteristic collector is a fingerprint identification sensor. When the biological characteristic is one or more parameters of an iris, a face or skin, the biological characteristic collector is a camera. When the biological characteristic is one or more parameters of a voice, the biological characteristic collector is a microphone (MIC).

In Step 302, an acquisition request is sent to a mobile terminal.

Optionally, the control terminal establishes a connection with the mobile terminal in at least one manner of BT, WIFI and NFC.

The control terminal sends the acquisition request to the mobile terminal with which the connection is established in real time after collecting the biological characteristic information. The acquisition request is a request configured to acquire a relationship from the mobile terminal. Optionally, the relationship includes: one or more relationships between biological characteristics and corresponding control operations.

Optionally, when the smart appliance is a smart window, the control operation includes: one of opening, closing and locking the smart window or regulating an opening angle. When the smart appliance is a smart lamp, the control operation includes: one of turning on, turning off or luminance regulation. When the smart appliance is a smart curtain, the control operation includes: regulating an opening width or regulating an opening height. When the smart appliance is a smart air conditioner, the control operation includes: one of turning on, turning off, temperature regulation, air volume regulation or timing.

It is important to supplement that the relationship between the various biological characteristic information and the control operations is pre-stored in the mobile terminal. A specific implementation process of pre-storing the relationships in the mobile terminal may include the following steps.

Step One: the mobile terminal collects at least one piece of sample biological characteristic information, the sample biological characteristic information including the biological characteristic information.

The mobile terminal collects the at least one piece of sample biological characteristic information through the biological characteristic collector in advance.

Optionally, the at least one piece of sample biological characteristic information includes: at least one piece of sample biological characteristic information of the same user, or, at least one piece of sample biological characteristic information of multiple users. For example, the control terminal may collect fingerprint images of different fingers of the same user as sample fingerprint images. In another example, the control terminal may acquire fingerprint images of one or more fingers of a plurality of users (e.g. three users) as sample fingerprint images.

Step Two: the mobile terminal receives a setting signal, and sets a control operation corresponding to each piece of sample biological characteristic information according to the setting signal.

The mobile terminal receives the setting signal triggered by a user after collecting the at least one piece of sample biological characteristic information, and the setting signal refers to a signal for setting the corresponding control operation for each piece of sample biological characteristic information. The mobile terminal sets the control operation corresponding to each piece of sample biological characteristic information according to the setting signal after receiving the setting signal.

For example, for fingerprint images of different fingers of the same user, a corresponding control operation including preset function execution of the smart window is set for a combination of the fingerprint image of the left thumb, the fingerprint image of the index finger and the fingerprint image of the middle finger; a corresponding control operation including preset function execution of the smart lamp is set for a combination of the fingerprint image of the left ring finger and the fingerprint image of the little finger; a corresponding control operation including preset function execution of the smart curtain is set for a combination of the fingerprint image of the left thumb and the fingerprint image of the left index finger; and a corresponding control operation including preset function execution of the smart air conditioner is set for a combination of the fingerprint image of the left middle finger and the fingerprint image of the left ring finger.

Exemplarily, if the biological characteristic information is a fingerprint image and the smart home appliance is the smart window, the relationship between the biological characteristic information and the control operations is shown in the following Table 1.

**Table 1**

| Biological characteristic information | Control operation |
|---|---|
| Fingerprint image A | A smart window 1 executes an opening operation |
| Fingerprint image B | A smart window 2 and a smart window 3 execute the opening operation |
| Fingerprint image C | A smart window 4, a smart window 5 and a smart window 6 execute the opening operation |

From Table 1, it can be seen that the control operation corresponding to the fingerprint image A is that the smart window 1 executes the opening operation; the control operation corresponding to the fingerprint image B is that the smart window 2 and the smart window 3 execute the opening operation; and the control operation corresponding to the fingerprint image C is that the smart window 4, the smart window 5 and the smart window 6 execute the opening operation.

Step Three: the mobile terminal establishes and stores a relationship between sample biological characteristic information and a corresponding control operation.

After setting the corresponding control operation for each piece of sample biological characteristic information, the mobile terminal establishes the relationship between the sample biological characteristic information and the corresponding control operation, and stores the relationship between each piece of sample biological characteristic information and the control operation.

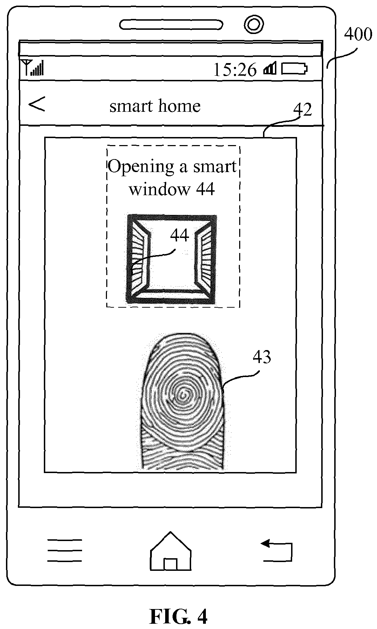

In an exemplary example, the sample biological characteristic information is sample fingerprint images. A schematic diagram illustrating pre-storage of the relationship in the mobile terminal is shown in Fig. 4. The mobile terminal 400 collects the sample fingerprint images through a display interface 42 of a third-party Application (APP) of the smart home appliance, and sets a corresponding control operation for each sample fingerprint image. For example, the control operation corresponding to the sample fingerprint image 43 includes that: a smart window 44 executes the opening operation.

In Step 303, a relationship returned by the mobile terminal is received.

The mobile terminal feeds back the pre-stored relationship to the control terminal after receiving the acquisition request, and the control terminal receives the relationship fed back by the mobile terminal according to the acquisition request.

In Step 304, a control operation corresponding to the biological characteristic information according to the relationship is acquired.

After receiving the relationship, the control terminal acquires the control operation corresponding to the collected biological characteristic information according to the relationship, stored in the relationship, between the biological characteristic information and the control operations.

For example, referring to the relationship shown in Table 1, when the biological characteristic information collected by the control terminal is the fingerprint image B, the control operation acquired by the control terminal according to the relationship fed back by the mobile terminal and corresponding to the fingerprint image B is that: the smart window 2 and the smart window 3 execute the opening operation.

In Step 305, a smart home appliance is controlled to execute a preset function according to the acquired control operation.

The control terminal controls the smart home appliance to execute the preset function according to the control operation after acquiring the control operation corresponding to the collected biological characteristic information.

Herein, the smart home appliance includes at least one of smart home appliance device, a smart window and a smart curtain.

Optionally, the smart home appliance includes a smart window, and the control terminal controls the smart window to be opened, closed and locked or regulates an opening angle of the smart window according to the control operation after acquiring the control operation.

For example, Xiaoming inputs a fingerprint image of his own thumb into a control panel arranged on a wall, the control panel sends an acquisition request to a mobile phone A, which establishes a connection in advance through WIFI, of Xiaoming after collecting a fingerprint image of the thumb finger of Xiaoming, the mobile phone A of Xiaoming feeds back a pre-stored relationship between fingerprint images of Xiaoming and control operations to the control panel, the control panel acquires the control operation corresponding to the fingerprint image of the thumb of Xiaoming to be an operation of opening a window 2 and window 3 of a front balcony according to the relationship fed back by the mobile phone A, and the control panel opens the window 2 and window 3 of the front balcony according to the control operation.

Optionally, the smart home appliance includes a smart lamp, and the control terminal controls the smart lamp to be turned on and turned off or regulates illuminance according to the control operation after acquiring the control operation.

For example, Xiaoming inputs his own face information into the control panel arranged on the wall, the control panel sends an acquisition request to the mobile phone A, which establishes the connection in advance through WIFI, of Xiaoming after collecting the face information of Xiaoming, the mobile phone A of Xiaoming feeds back a pre-stored relationship between face information of Xiaoming and a control operation to the control panel, the control panel acquires the control operation corresponding to the face information of Xiaoming to be a turning-off operation over a lamp A and lamp B in a living room according to the relationship fed back by the mobile phone A, and the control panel turns off the lamp A and the lamp B according to the acquired control operation.

Optionally, the smart home appliance includes a smart air conditioner, and the control terminal controls the smart air conditioner to be turned on and turned off, regulates a temperature or an air volume or implements timing according to the control operation after acquiring the control operation.

For example, Xiaoming inputs his own voice information into the control panel arranged on the wall, the control panel sends the voice information to the mobile phone A, which establishes the connection in advance through WIFI, of Xiaoming after collecting the voice information of Xiaoming, the mobile phone A of Xiaoming acquires a control operation corresponding to the voice information of Xiaoming to be that an air conditioner in a room executes a turning on operation and regulates temperature to 25° according to a pre-stored relationship between voice information of Xiaoming and a control operation, the mobile phone A feeds back the control operation to the control panel, and the control panel turns on the air condition in the room and regulates the temperature to 25° according to the received control operation.

Optionally, the smart home appliance includes a smart curtain, and the control terminal controls the smart curtain to regulate an opening width or regulate an opening height according to the control operation after acquiring the control operation.

For example, Xiaoming inputs his own iris information into the control panel arranged on the wall, the control panel sends an acquisition request to the mobile phone A, which establishes the connection in advance through WIFI, of Xiaoming after collecting the iris information of Xiaoming, the mobile phone A of Xiaoming feeds back a pre-stored relationship between iris information of Xiaoming and a control operation to the control panel, the control panel acquires the control operation corresponding to the iris information of Xiaoming to be that a curtain in the room executes an operation of opening by a 2-meter width according to the relationship fed back by the mobile phone A, and the control panel opens the curtain in the room to be 2 meters wide according to the acquired control operation.

From the above, according to the method provided by the embodiment of the present disclosure, the biological characteristic information is collected; the control operation corresponding to the biological characteristic information is acquired; and the smart home appliance is controlled to execute the preset function according to the control operation. Therefore, such a problem in the related technology is solved that a control process is relatively more tedious and an operation of a user is relatively higher in complexity since the user is required to control the smart home appliance to execute a fixed function through a fixed button when using the smart home appliance. Effects of controlling the smart home appliance to execute the preset function according to the control operation corresponding to the biological characteristic information of the user, reducing complexity in control over the smart home appliance and simplifying the control process are achieved.

In an exemplary example, it is supposed that a control terminal is arranged in the house of Xiaoming and a relationship between fingerprint images of four fingers of Xiaohong and control operations is pre-stored in a mobile phone C of Xiaohong. For example, the control operation corresponding to the fingerprint image of the thumb is that: a smart window 11 and smart window 12 in a front balcony execute an opening operation; the control operation corresponding to the fingerprint image of the index finger is that: a smart window 12 in a rear balcony executes the opening operation; the control operation corresponding to the fingerprint image of the middle finger is that: a smart window 14 and smart window 15 in a large room execute the opening operation; and the control operation corresponding to the fingerprint image of the ring finger is that: a smart window 16 and smart window 17 in a living room execute the opening operation. The control terminal establishes a connection with the mobile phone C through WIFI in Xiaohong's home at first, when Xiaohong is required to open a window in the large room, Xiaohong inputs the fingerprint image of the middle finger into the control terminal, the control terminal collects the fingerprint image of the middle finger of Xiaohong, the control terminal sends an acquisition request to the mobile phone C after collecting the fingerprint image of the middle finger, after the mobile phone C receives the acquisition request, the mobile phone C returns the relationship between the fingerprint images of the four fingers of Xiaohong and the control operations to the control terminal, the control terminal acquires the control operation (the smart window 14 and smart window 15 in the large room execute the opening operation) corresponding to the fingerprint image of the middle finger according to the received relationship, and the control terminal opens the smart window 14 and smart window 15 in the large room according to the acquired control operation.

A first point to be supplemented is that descriptions are made with only one control terminal as an example in the embodiment shown in Fig. 3 but a number of control terminals is not specifically limited. Optionally, the number of the control terminals may be at least two. For example, a control terminal is arranged in each story in a two-story villa.

A second point to be supplemented is that descriptions are made only with the condition that the relationship is that one piece of biological characteristic information corresponds to one control operation as an example in the embodiment. Optionally, the relationship may be that a combination of at least two pieces of biological characteristic information corresponds to a control operation, wherein the at least two pieces of biological characteristic information may be biological characteristic information of the same type, for example, a combination of the fingerprint image of the thumb and the fingerprint image of the index finger of the user. Alternatively, the at least two pieces of biological characteristic information may be biological characteristic information of different types, for example, the face of the user and the fingerprint image of the user.

A third point to be supplemented is that descriptions are made only with the condition that the control terminal directly collects the biological characteristic information and controls the smart home appliance to execute the preset function according to the control operation corresponding to the biological characteristic information as an example in the embodiment. Optionally, before the control terminal collects the biological characteristic information, the user pre-selects a type of the smart home appliance to be controlled through the control terminal, and then the biological characteristic information is collected, the control operation corresponding to the biological characteristic information is acquired, and the smart home appliance is controlled to execute the preset function according to the control operation. Optionally, for different types of smart home appliances, the same biological characteristic information corresponds to different control operations. For example, when the user selects a smart window, the control operation corresponding to the fingerprint image of the index finger of the user is that: the smart window 1 and the smart window 2 execute the opening operation; and when the user selects a smart lamp, the control operation corresponding to the fingerprint image of the index finger of the user is that: the smart lamp A and the smart lamp B execute the turning-off operation.

A fourth point to be supplemented is that descriptions are made only with the condition that the control terminal includes only one region where the biological characteristic information is collected as an example in the embodiment. Optionally, the control terminal is divided into N regions, and the relationship includes a relationship among region identifiers, biological characteristic information and control operations. For example, a control operation corresponding to a fingerprint image of the thumb of a user in a region 1 is that the smart window A executes the opening operation; and a control operation corresponding to a fingerprint image of the thumb of a user in a region 2 is that the smart lamp 1 and the smart lamp 2 execute the turning-on operation.

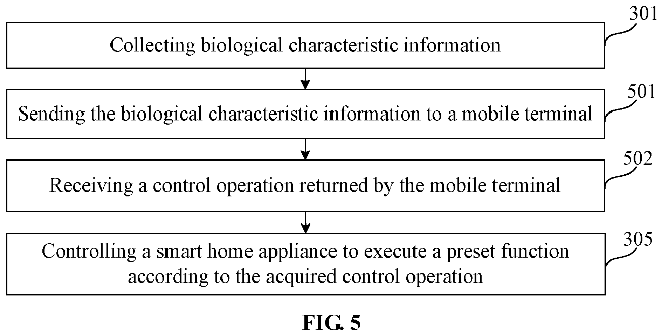

Based on the embodiment shown in Fig. 3, in Step 302 to Step 304, the control terminal acquires the relationship from the mobile terminal after acquiring the biological characteristic information, thereby obtaining the control operation corresponding to the biological characteristic information. As another possible implementation mode, the control terminal sends the acquired biological characteristic information to the mobile terminal, and receives the control operation fed back by the mobile terminal. Therefore, Step 302 to Step 304 may be replaced with the following Step 501 and Step 502, as shown in Fig. 5.

In Step 501, the biological characteristic information is sent to the mobile terminal.

Optionally, the control terminal establishes the connection with the mobile terminal in the at least one manner of BT, WIFI and NFC.

The control terminal sends the biological characteristic information to the mobile terminal with which the connection is established in real time after collecting the biological characteristic information.

It is important to supplement that the mobile terminal acquires the control operation corresponding to the received biological characteristic information according to the relationship, pre-stored in the mobile terminal, between the biological characteristic information and the control operations after receiving the biological characteristic information. The mobile terminal feeds back the acquired control operation to the control terminal after acquiring the control operation.

Optionally, when the smart appliance is a smart window, the control operation includes one of opening, closing and locking the smart window or regulating the opening angle. When the smart appliance is a smart lamp, the control operation includes one of turning on, turning off or luminance regulation. When the smart appliance is a smart curtain, the control operation includes regulating the opening width or regulating the opening height. When the smart appliance is a smart air conditioner, the control operation includes one of turning on, turning off, temperature regulation, air volume regulation or timing.

In Step 502, the control operation returned by the mobile terminal is received.

The control terminal receives the control operation acquired by the mobile terminal according to the relationship and corresponding to the biological characteristic information.

A first point to be supplemented is that descriptions are made only with the abovementioned two possible implementation modes as an example in the embodiment but there are no limits made to a manner for the control terminal to acquire the control operation corresponding to the biological characteristic information. Optionally, the control terminal acquires the control operation corresponding to the collected biological characteristic information according to the relationship, pre-stored in the control terminal, between the biological characteristic information and the control operations after collecting the biological characteristic information. Alternatively, the control terminal stores the relationship between the biological characteristic information and the acquired control operation after acquiring the control operation corresponding to the biological characteristic information through the abovementioned possible implementation modes, so that the control terminal may control the smart home appliance to execute the preset function according to the control operation, stored previously, corresponding to the biological characteristic information after collecting the biological characteristic information again.

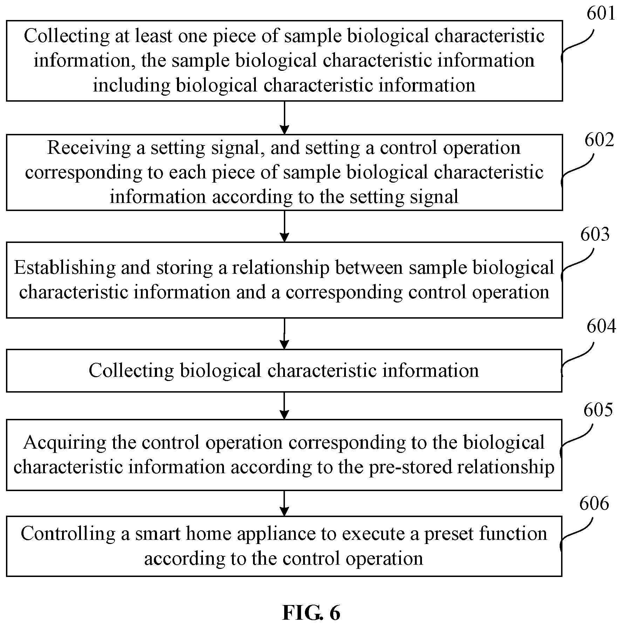

As a possible implementation mode, the method for controlling a device may include the following steps, as shown in Fig. 6.

In Step 601, at least one piece of sample biological characteristic information is collected, the sample biological characteristic information including the biological characteristic information.

Optionally, the at least one piece of sample biological characteristic information includes: at least one piece of sample biological characteristic information of the same user, or, at least one piece of sample biological characteristic information of multiple users. For example, the control terminal collects fingerprint images of different fingers of the same user as sample fingerprint images. For another example, the control terminal acquires fingerprint images of different fingers of three users as sample fingerprint images.

In Step 602, a setting signal is received, and a control operation corresponding to each piece of sample biological characteristic information is set according to the setting signal.

The control terminal receives the setting signal triggered by the user after collecting the at least one piece of sample biological characteristic information, and the setting signal refers to a signal of setting the corresponding control operation for each piece of sample biological characteristic information. The control terminal sets the control operation corresponding to each piece of sample biological characteristic information according to the setting signal after receiving the setting signal.

In Step 603, a relationship between sample biological characteristic information and a corresponding control operation is established and stored.

After the corresponding control operation is set for each piece of sample biological characteristic information, the relationship between the sample biological characteristic information and the corresponding control operation is established, and the relationship between each piece of sample biological characteristic information and the control operation is stored.

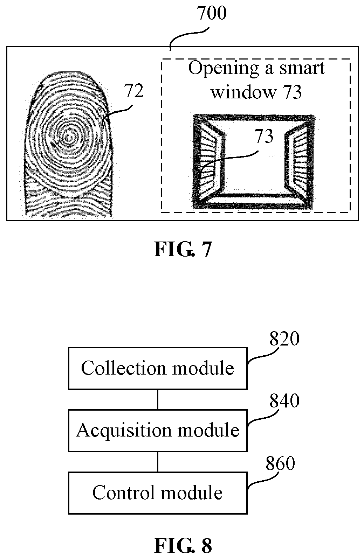

Step 601 to Step 603 are a specific implementation process of pre-storing the relationship in the control terminal, a specific storage process is the same as the process of pre-storing the relationship in the mobile terminal shown in Fig. 3, and detailed descriptions refer to Fig. 3. In an exemplary example, the sample biological characteristic information is sample fingerprint images, a schematic diagram illustrating pre-storage of the relationship in the control terminal refers to Fig. 7, an interface for collecting and displaying the sample fingerprint images is set on a display interface of the control terminal 700, and the control terminal 700 sets a corresponding control operation for each sample fingerprint image after collecting the sample fingerprint images. For example, the control operation corresponding to a sample fingerprint image 72 includes that: a smart window 73 executes an opening operation.

When the user is required to open a smart window, the smart home appliance may be controlled to execute the preset function only by inputting his own biological characteristic information, and a specific implementation process includes the following Step 604 to Step 606.

In Step 604, biological characteristic information is collected.

In Step 605, the control operation corresponding to the biological characteristic information is acquired according to the pre-stored relationship.

In Step 606, the smart home appliance is controlled to execute a preset function according to the control operation.

Step 604 is similar to Step 301 shown in Fig. 3, Step 606 is similar to Step 305 shown in Fig. 3, and detailed descriptions refer to Fig. 3.

From the above, according to the appliance control method provided by the embodiment of the present disclosure, the biological characteristic information is collected; the control operation corresponding to the biological characteristic information is acquired; and the smart home appliance is controlled to execute the preset function according to the control operation. Therefore, such a problem in the related technology is solved that a control process is relatively more tedious and an operation of the user is relatively higher in complexity since the user is required to control the smart home appliance to execute a fixed function through a fixed button when using the smart home appliance. Effects of controlling the smart home appliance to execute the preset function according to the control operation corresponding to the biological characteristic information of the user, reducing complexity in control over the smart home appliance and simplifying the control process are achieved.

A second point to be supplemented is that the smart home appliance executes the operation of the preset function in combination with a preset animation when the control terminal or the mobile terminal pre-stores the relationship between the biological characteristic information and the control operation. For example, the smart window executes the operation of opening the smart window in combination with a window opening animation. Alternatively, the smart home appliance executes the operation of the preset function in combination with a preset voice. For example, the smart window A executes the operation of opening the smart window A in combination with a prompting voice of "opening the smart window A".

A third point to be supplemented is that the relationship between different control operations of the smart home appliance and different biological characteristic information is established in the embodiment of the present disclosure. Optionally, when pre-storing the relationship between the biological characteristic information and the control operation, the control terminal or the mobile terminal may further store an operation opposite to the control operation corresponding to biological characteristic information input last time when inputting the same biological characteristic information again. For example: the control operation corresponding to the fingerprint image 72 includes that: the smart window 73 executes the opening operation; and when the fingerprint image 72 is input again, the control terminal controls the smart window 73 to execute a closing operation.

A fourth point to be supplemented is that the control terminal or the mobile terminal sets the corresponding control operation for each piece of sample biological characteristic information according to the setting signal when collecting the at least one piece of sample biological characteristic information. Optionally, a plurality of control operations are pre-stored in the control terminal or the mobile terminal, and when collecting the at least one piece of sample biological characteristic information, the control terminal or the mobile terminal selects the control operation required by each piece of sample biological characteristic information from the plurality of control operations, and stores the relationship between each piece of sample biological characteristic information and the selected control operation.

The below is an apparatus embodiment of the present disclosure, which may be configured to execute the method embodiment of the present disclosure. Details undisclosed in the apparatus embodiment of the present disclosure refer to the method embodiment of the present disclosure.

Fig. 8 is a block diagram illustrating an apparatus for controlling a device according to an exemplary embodiment. As shown in Fig. 8, the apparatus is applied to a control terminal in an implementation environment shown in Fig. 1, and the apparatus includes, but not limited to:
a collection module 820, configured to collect biological characteristic information;
an acquisition module 840, configured to acquire a control operation corresponding to the biological characteristic information, different biological characteristic information corresponding to different control operations; and
a control module 860, configured to control smart home device to execute a preset function according to the control operation, the smart home device including at least one of a smart home appliance , a smart window and a smart curtain.

From the above, according to the apparatus provided by the embodiment of the present disclosure, the biological characteristic information is collected; the control operation corresponding to the biological characteristic information is acquired; and the smart home appliance is controlled to execute the preset function according to the control operation. Therefore, such a problem in the related technology is solved that a control process is relatively more tedious and an operation of a user is relatively higher in complexity since the user is required to control the smart home appliance to execute a fixed function through a fixed button when using the smart home appliance. Effects of controlling the smart home appliance to execute the preset function according to the control operation corresponding to the biological characteristic information of the user, reducing complexity in control over the smart home appliance and simplifying the control process are achieved.

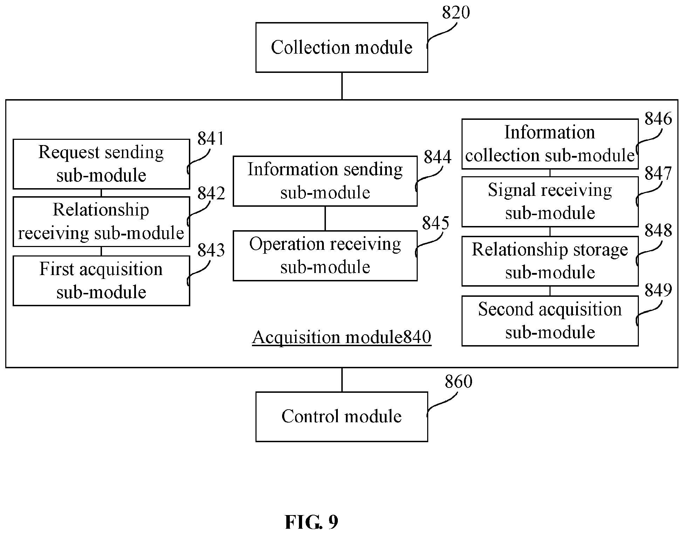

Fig. 9 is a block diagram illustrating an apparatus for controlling a device according to another exemplary embodiment. As shown in Fig. 9, the apparatus is applied to a control terminal in an implementation environment shown in Fig. 1, and the apparatus includes, but not limited to:
a collection module 820, configured to collect biological characteristic information; and
an acquisition module 840, configured to acquire a control operation corresponding to the biological characteristic information, different biological characteristic information corresponding to different control operations.

Optionally, the acquisition module 840 includes a request sending sub-module 841, a relationship receiving sub-module 842 and a first acquisition sub-module 843.

The request sending sub-module 841 is configured to send an acquisition request to a mobile terminal.

The relationship receiving sub-module 842 is configured to receive a relationship returned by the mobile terminal, the relationship including a relationship between biological characteristic information and control operations.

The first acquisition sub-module 843 is configured to acquire the control operation corresponding to the biological characteristic information according to the relationship.

Optionally, the acquisition module 840 includes an information sending sub-module 844 and an operation receiving sub-module 845.

The information sending sub-module 844 is configured to send the biological characteristic information to the mobile terminal, the mobile terminal acquiring the control operation corresponding to the biological characteristic information according to a relationship and the relationship including a relationship between biological characteristic information and control operations.

The operation receiving sub-module 845 is configured to receive the control operation returned by the mobile terminal.

Optionally, the acquisition module 840 includes an information collection sub-module 846, a signal receiving sub-module 847, a relationship storage sub-module 848 and a second acquisition sub-module 849.

The information collection sub-module 846 is configured to collect at least one piece of sample biological characteristic information, the sample biological characteristic information including the biological characteristic information.

The signal receiving sub-module 847 is configured to receive a setting signal and set a corresponding control operation for each piece of sample biological characteristic information according to the setting signal.

The relationship storage sub-module 848 is configured to establish and store a relationship between each piece of sample biological characteristic information and a corresponding control operation.

The second acquisition sub-module 849 is configured to acquire the control operation corresponding to the biological characteristic information according to the relationship.

A control module 860 is configured to control smart home device to execute a preset function according to the control operation, the smart home device including at least one of a smart home appliance, a smart window and a smart curtain.

Optionally, the smart home appliance includes a smart window, and the control module 860 is further configured to control the smart window to be opened, closed and locked or regulate an opening angle of the smart window according to the control operation.

Optionally, the smart home appliance includes a smart lamp, and the control module 860 is further configured to control the smart lamp to be turned on and turned off or regulate luminance according to the control operation.

Optionally, the smart home appliance includes a smart air conditioner, and the control module 860 is further configured to control the smart air conditioner to be turned on and turned off, regulate a temperature, regulate an air volume or implement timing according to the control operation.

Optionally, the smart home appliance includes a smart curtain, and the control module 860 is further configured to control the smart curtain to regulate an opening width or regulate an opening height according to the control operation.

From the above, according to the apparatus provided by the embodiment of the present disclosure, the biological characteristic information is collected; the control operation corresponding to the biological characteristic information is acquired; and the smart home appliance is controlled to execute the preset function according to the control operation. Therefore, such a problem in the related technology is solved that a control process is relatively more tedious and an operation of a user is relatively higher in complexity since the user is required to control the smart home appliance to execute a fixed function through a fixed button when using the smart home appliance. Effects of controlling the smart home appliance to execute the preset function according to the control operation corresponding to the biological characteristic information of the user, reducing complexity in control over the smart home appliance and simplifying the control process are achieved.

With respect to the apparatuses in the above embodiments, the specific manners for performing operations for individual modules therein have been described in detail in the embodiments regarding the respective methods, which will not be elaborated herein.

An exemplary embodiment of the present disclosure provides an apparatus for controlling a device, which may implement a method for controlling a device provided by the present disclosure, the apparatus including: a processor and a memory configured to store instructions executable by the processor,
wherein the processor is configured to:
collect biological characteristic information;
acquire a control operation corresponding to the biological characteristic information; and
control smart home device to execute a preset function according to the control operation, the smart home device including at least one of a smart home appliance , a smart window and a smart curtain.

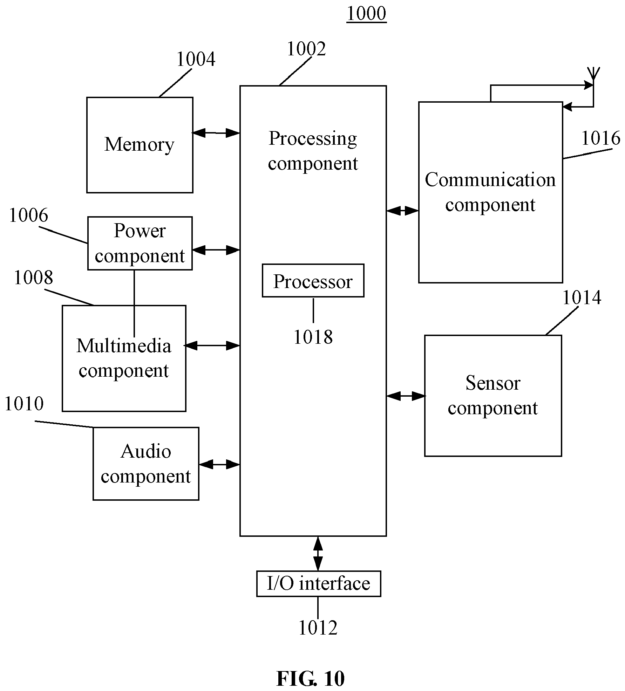

Fig. 10 is a block diagram illustrating an apparatus for controlling a device according to an exemplary embodiment. For example, the apparatus 1000 may be a console, a mobile phone, a computer, a digital broadcast terminal, a messaging device, a gaming console, a tablet, a medical device, exercise equipment, a personal digital assistant or the like.

Referring to Fig. 10, the apparatus 1000 may include one or more of the following components: a processing component 1002, a memory 1004, a power component 1006, a multimedia component 1008, an audio component 1010, an Input/Output (I/O) interface 1012, a sensor component 1014, and a communication component 1016.

The processing component 1002 typically controls overall operations of the apparatus 1000, such as the operations associated with display, telephone calls, data communications, camera operations, and recording operations. The processing component 1002 may include one or more processors 1018 to execute instructions to perform all or part of the steps in the abovementioned method. Moreover, the processing component 1002 may include one or more modules which facilitate interaction between the processing component 1002 and the other components. For instance, the processing component 1002 may include a multimedia module to facilitate interaction between the multimedia component 1008 and the processing component 1002.

The memory 1004 is configured to store various types of data to support the operation of the apparatus 1000. Examples of such data include instructions for any APPs or methods operated on the apparatus 1000, contact data, phonebook data, messages, pictures, video, etc. The memory 1004 may be implemented by any type of volatile or non-volatile memory apparatuss, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 1006 provides power for various components of the apparatus 1000. The power component 1006 may include a power management system, one or more power supplies, and other components associated with the generation, management and distribution of power for the apparatus 1000.

The multimedia component 1008 includes a screen providing an output interface between the apparatus 1000 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 1008 includes a front camera and/or a rear camera. The front camera and/or the rear camera may receive external multimedia data when the apparatus 1000 is in an operation mode, such as a photographing mode or a video mode. Each of the front camera and the rear camera may be a fixed optical lens system or have focusing and optical zooming capabilities.

The audio component 1010 is configured to output and/or input an audio signal. For example, the audio component 1010 includes a MIC, and the MIC is configured to receive an external audio signal when the apparatus 1000 is in the operation mode, such as a call mode, a recording mode and a voice recognition mode. The received audio signal may be further stored in the memory 1004 or sent through the communication component 1016. In some embodiments, the audio component 1010 further includes a speaker configured to output the audio signal.

The I/O interface 1012 provides an interface between the processing component 1002 and a peripheral interface module, and the peripheral interface module may be a keyboard, a click wheel, a button or the like. The button may include, but not limited to: a home button, a volume button, a starting button and a locking button.

The sensor component 1014 includes one or more sensors configured to provide status assessment in various aspects for the apparatus 1000. For instance, the sensor component 1014 may detect an on/off status of the apparatus 1000 and relative positioning of components, such as a display and small keyboard of the apparatus 1000, and the sensor component 1014 may further detect a change in a position of the apparatus 1000 or a component of the apparatus 1000, presence or absence of contact between the user and the apparatus 1000, orientation or acceleration/deceleration of the apparatus 1000 and a change in temperature of the apparatus 1000. The sensor component 1014 may include a proximity sensor configured to detect presence of an object nearby without any physical contact. The sensor component 1014 may also include a light sensor, such as a Complementary Metal Oxide Semiconductor (CMOS) or Charge Coupled Device (CCD) image sensor, configured for use in an imaging APP. In some embodiments, the sensor component 1014 may also include an acceleration sensor, a gyroscope sensor, a magnetic sensor, a pressure sensor or a temperature sensor.

The communication component 1016 is configured to facilitate wired or wireless communication between the apparatus 1000 and another device. The apparatus 1000 may access a communication-standard-based wireless network, such as a WIFI network, a 2nd-Generation (2G) or 3rd-Generation (3G) network or a combination thereof. In an exemplary embodiment, the communication component 1016 receives a broadcast signal or broadcast associated information from an external broadcast management system through a broadcast channel. In an exemplary embodiment, the communication component 1016 further includes an NFC module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the apparatus 1000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute a method for controlling a device, wherein the method includes: collecting biological characteristic information; acquiring a control operation corresponding to the biological characteristic information; and controlling smart home device to execute a preset function according to the control operation, the smart home device including at least one of a smart home appliance, a smart window and a smart curtain. Optionally, acquiring the control operation corresponding to the biological characteristic information includes: sending an acquisition request to a mobile terminal; receiving a relationship returned by the mobile terminal, the relationship including a relationship between biological characteristic information and control operations; and acquiring the control operation corresponding to the biological characteristic information according to the relationship. Optionally, acquiring the control operation corresponding to the biological characteristic information includes: sending the biological characteristic information to the mobile terminal, the mobile terminal acquiring the control operation corresponding to the biological characteristic information according to a relationship and the relationship including a relationship between biological characteristic information and control operations; and receiving the control operation returned by the mobile terminal. Optionally, acquiring the control operation corresponding to the biological characteristic information includes: collecting at least one piece of sample biological characteristic information, the sample biological characteristic information including the biological characteristic information; receiving a setting signal, and setting a corresponding control operation for each piece of sample biological characteristic information according to the setting signal; establishing and storing a relationship between each piece of sample biological characteristic information and a corresponding control operation; and acquiring the control operation corresponding to the biological characteristic information according to the relationship. Optionally, the smart home appliance includes a smart window, and controlling the smart home appliance to execute the preset function according to the control operation includes: controlling the smart window to be opened, closed and locked or regulating an opening angle of the smart window according to the control operation. Optionally, the smart home appliance includes a smart lamp, and controlling the smart home appliance to execute the preset function according to the control operation includes: controlling the smart lamp to be turned on and turned off or regulating luminance according to the control operation. Optionally, the smart home appliance includes a smart air conditioner, and controlling the smart home appliance to execute the preset function according to the control operation includes: controlling the smart air conditioner to be turned on and turned off, regulating a temperature or an air volume or implementing timing according to the control operation. Optionally, the smart home appliance includes a smart curtain, and controlling the smart home appliance to execute the preset function according to the control operation includes: regulating an opening width an opening height of the smart curtain according to the control operation.

In an exemplary embodiment, there is also provided a non-transitory computer-readable storage medium including instructions, such as the memory 1004 including instructions, and the instructions may be executed by the processor 1018 of the apparatus 1000 to implement the abovementioned method. For example, the non-transitory computer-readable storage medium may be a ROM, a Radom Access Memory (RAM), a Compact Disc Read-Only Memory (CD-ROM), a magnetic tape, a floppy disc, an optical data storage device or the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A method for controlling a smart home device, comprising, at a control terminal:
collecting (201, 301) biological characteristic information of a user;
acquiring (202) a control operation corresponding to the biological characteristic information, different biological characteristic information corresponding to different control operations according to a pre-stored relationship; and
controlling (203, 305) the smart home device to execute a preset function according to the control operation.

2. The method of claim 1, wherein acquiring (202) the control operation corresponding to the biological characteristic information comprises:
sending (302) an acquisition request to a mobile terminal;
receiving (303), in response to the acquisition request, a relationship returned by the mobile terminal, the relationship comprising a relationship between biological characteristic information and control operations; and
acquiring (304) the control operation corresponding to the collected biological characteristic information according to the relationship.

3. The method of claim 1, wherein acquiring (202) the control operation corresponding to the biological characteristic information comprises:
sending (501) the biological characteristic information to a mobile terminal, the mobile terminal acquiring the control operation corresponding to the biological characteristic information according to a relationship and the relationship comprising a relationship between biological characteristic information and control operations; and
receiving (502) the control operation returned by the mobile terminal.

4. The method of any preceding claim, wherein the method further comprises:
collecting (601) at least one piece of sample biological characteristic information, the sample biological characteristic information comprising the biological characteristic information;
receiving (602) a setting signal, and setting a corresponding control operation for each piece of sample biological characteristic information according to the setting signal; and
establishing and storing (603) a relationship between each piece of sample biological characteristic information and a corresponding control operation.

5. The method of any preceding claim, wherein the smart home device comprises a smart window, and controlling the smart home device to execute the preset function according to the control operation comprises:
controlling the smart window to be opened, closed and locked or regulating an opening angle of the smart window according to the control operation.

6. The method of any one of claims 1-4, wherein the smart home device comprises a smart lamp, and controlling the smart home device to execute the preset function according to the control operation comprises:
controlling the smart lamp to be turned on and turned off or regulating luminance according to the control operation; or
wherein the smart home device comprises a smart air conditioner, and controlling the smart home device to execute the preset function according to the control operation comprises:
controlling the smart air conditioner to be turned on and turned off, regulating a temperature or an air volume or implementing timing according to the control operation; or
wherein the smart home device comprises a smart curtain, and controlling the smart home device to execute the preset function according to the control operation comprises:
regulating an opening width or an opening height of the smart curtain according to the control operation.

7. The method of any preceding claim wherein the biological characteristic information includes thumb or fingerprint information and there is a pre-stored relationship between control functions and biological characteristic information relating to respective thumb or fingerprints of a user, the method further comprising:
acquiring a first control operation corresponding to a first thumb or fingerprint of the user and controlling a smart home device to execute a first preset function according to the first control operation;
acquiring a second control operation corresponding to a second thumb or fingerprint, different to the first, of the user and controlling a smart home device to execute a second preset function according to the second control operation.

8. An apparatus for controlling a smart home device, the apparatus comprising:
a collection module (820), configured to collect biological characteristic information;
an acquisition module (840), configured to acquire a control operation corresponding to the biological characteristic information, different biological characteristic information corresponding to different control operations according to a pre-stored relationship; and
a control module (860), configured to control a smart home device to execute a preset function according to the control operation.

9. The apparatus of claim 8, wherein the acquisition module (840) comprises:
a request sending sub-module (841), configured to send an acquisition request to a mobile terminal;
a relationship receiving sub-module (842), configured to receive, in response to the acquisition request, a relationship returned by the mobile terminal, the relationship comprising a relationship between biological characteristic information and control operations; and
a first acquisition sub-module (843), configured to acquire the control operation corresponding to the collected biological characteristic information according to the relationship.

10. The apparatus of claim 8, wherein the acquisition module (840) comprises:
an information sending sub-module (844), configured to send the biological characteristic information to the mobile terminal, a mobile terminal acquiring the control operation corresponding to the biological characteristic information according to a relationship and the relationship comprising a relationship between biological characteristic information and control operations; and
an operation receiving sub-module (845), configured to receive the control operation returned by the mobile terminal.

11. The apparatus of any of claims 8 to 10, wherein the acquisition module (840) comprises:
an information collection sub-module (846), configured to collect at least one piece of sample biological characteristic information, the sample biological characteristic information comprising the biological characteristic information;
a signal receiving sub-module (847), configured to receive a setting signal and set a corresponding control operation for each piece of sample biological characteristic information according to the setting signal; and
a relationship storage sub-module (848), configured to establish and store a relationship between each piece of sample biological characteristic information and a corresponding control operation.

12. The apparatus of any one of claims 8-11, wherein the smart home device comprises a smart window, and the control module (860) is further configured to control the smart window to be opened, closed and locked or regulate an opening angle of the smart window according to the control operation, or
wherein the smart home device comprises a smart lamp, and the control module (860) is further configured to control the smart lamp to be turned on and turned off or regulate luminance according to the control operation, or,
wherein the smart home device comprises a smart air conditioner, and the control module (860) is further configured to control the smart air conditioner to be turned on and turned off, regulate a temperature or an air volume or implement timing according to the control operation, or,
wherein the smart home device comprises a smart curtain, and the control module (860) is further configured to regulate an opening width or an opening height of the smart curtain according to the control operation.

13. The apparatus of any preceding claim further comprising a fingerprint identification sensor wherein the biological characteristic information includes thumb or fingerprint information and there is a pre-stored relationship between control functions and biological characteristic information relating to respective thumb or fingerprints of a user, wherein:
the acquisition module is configured to acquire a first control operation corresponding to a first thumb or fingerprint of the user and the control module is configured to control a smart home device to execute a first preset function according to the first control operation;
the acquisition module is configured to acquire a second control operation corresponding to a second thumb or fingerprint of the user, the second thumb or fingerprint being different to the first, and the control module is configured to control a smart home device to execute a second preset function according to the second control operation.

14. An apparatus for controlling a device, comprising:
a processor; and
a memory configured to store instructions executable by the processor,
wherein the instructions are configured to cause the processor to carry out the method of any of claims 1 to 8.

15. A computer program, or a recording medium readable by a computer and having recorded thereon a computer program, that includes instructions that when executed cause the computer to carry out the steps of the method of any of claims 1 to 8.
